# EUROPEAN PATENT APPLICATION

(11) **EP 2 682 938 A2**
(43) Date of publication of application: **08.01.2014**
(21) Application number: 13175082.0
(22) Date of filing: 04.07.2013
(51) Int. Cl.: G09G 5/00

(54) **Electronic information terminal**

(30) Priority: 06.07.2012 JP 2012152439; 06.07.2012 JP 2012152440; 06.07.2012 JP 2012152441; 01.07.2013 JP 2013137751
(71) Applicant: Funai Electric Co., Ltd., Osaka 574-0013 (JP)
(72) Inventor: Sugiura, Ryusuke, Daito-shi, Osaka 574-0013 (JP); Kawamoto, Yusaku, Daito-shi, Osaka 574-0013 (JP); Tanaka, Hideaki, Daito-shi, Osaka 574-0013 (JP); Yamada, Daisuke, Daito-shi, Osaka 574-0013 (JP)
(74) Representative: Grünecker, Kinkeldey, Stockmair & Schwanhäusser

(57) **Abstract**

This electronic information terminal (10) includes a display panel (11) having a rectangular display area, an angle sensor (12) detecting rotation angle information, and a display control portion (14) controlling switching of the display orientation of the display panel on the basis of a detection result of the angle sensor. The display control portion is configured not to switch the display orientation when the turning angle velocity ([S44], [S46]) of the display panel based on the rotation angle information is smaller than a first threshold([S56]).

## Description

### BACKGROUND OF THE INVENTION

### Field of the Invention

The present invention relates to an electronic information terminal being portable and capable of switching a display screen between lateral orientation and longitudinal orientation for display.

### Description of the Background Art

An electronic information terminal, such as a tablet or a portable telephone, is known as a device being portable and capable of switching a display screen between lateral orientation and longitudinal orientation for display. In general, this electronic information terminal is portable and has a rectangular screen, and hence the electronic information terminal is configured to be capable of switching the display screen between lateral orientation and longitudinal orientation in order to effectively use vertically long screen display or horizontally long screen display. Such an electronic information terminal configured to switch a display screen between vertically long display and horizontally long display in use is disclosed in Japanese Patent Laying-Open Nos. 2008-131616, 2006-068027, and 2011-164625 and National Patent Publication Gazette No. 2003-511786.

Japanese Patent Laying-Open No. 2008-131616 discloses a portable terminal device, a method for switching display orientation, and a display orientation switching program, and more particularly, it discloses the structure of a portable terminal device 100 zooming in/out display content to be capable of displaying the display content on a display 12a without changing the aspect ratio thereof after rotating the display orientation of the display content on the display 12a by a content rotation processing portion 13b according to the rotation direction and rotation angle of the portable terminal device 100 detected by an acceleration sensor 16 when displaying the content on the display 12a. It is disclosed in paragraph 0021 that the portable terminal device 100 is configured not to perform an operation of rotating the display orientation of the content resulting from quick response to the rotation operation of the portable terminal device 100 or response to a short period of rotation operation of the portable terminal device 100 since the portable terminal device 100 is generally placed in an environment with vibration generated by user's carrying of the portable terminal device 100, and to perform the aforementioned processing for rotating the content in the case where the portable terminal device 100 rotates for at least a certain period of time previously set.

Japanese Patent Laying-Open No. 2006-068027 discloses a game device and a game program, and more particularly, it discloses the structure of a game device calculating the rotation angle of a housing on the basis of a detected angular velocity when a player rotates the game device itself about an axis perpendicular to a display screen and displaying a game image including a rotation image 100 rotated according to the rotation angle and a non-rotation image 102 controlled regardless of the rotation angle on the display screen.

Japanese Patent Laying-Open No. 2011-164625 discloses an electronic device, a display control method, and a program, and more particularly, it discloses the structure of a portable telephone 10 embedded with a sensor 18 including a triaxial acceleration sensor, for example, in the vicinity of a display portion 12 provided on a device body 11 of the portable telephone 10, detecting the movement direction and movement amount of the display portion 12 by the sensor 18 when a user holds the device body 11 and moves the display portion 12 in a direction (a Z-axis direction) perpendicular to the display screen thereof, and zooming in/out information displayed on the display screen of the display portion 12 with display magnification according to the movement amount at that time.

National Patent Publication Gazette No. 2003-511786 discloses an operation method of a user interface of a portable device, and more particularly, it discloses an operation method of a user interface of a portable device configured to change data on a display portion in order to detect or select intended data, such as a palm-sized or pocket-sized personal computer, a portable telephone, a communication device, or a similar device, the operation method of a user interface of a portable device **characterized in that** the movement of the device and the corresponding change of display data are defined so that the movement and the corresponding change of display data have a cause-consequence relationship that is analogous to a cause-consequence relationship between action and perception of a user in three-dimensional space and discloses an example of moving a selection (D5) of data on the display portion (2') in an inclination direction by inclining the device (2).

Generally, the electronic information terminal includes a gravity sensor or the like thereby being capable of automatically switching between vertically long display and horizontally long display according to the orientation of the electronic information terminal for display and being capable of prohibiting automatic switching if automatic switching is inconvenient. Although automatic switching is desired basically, the electronic information terminal disadvantageously frequently automatically switches between vertically long display and horizontally long display when a user uses the electronic information terminal in a particular manner. More specifically, when the user rotates the electronic information terminal for convenience of operation or for convenience of a usage environment without intention to rotate the electronic information terminal, the user does not wish to switch display. In other words, this wish cannot be satisfied with the aforementioned related art.

### SUMMARY OF THE INVENTION

An object of the present invention is to provide an electronic information terminal capable of preventing undesired switching of display orientation, reflecting a user's intention and a display method of the electronic information terminal.

An electronic information terminal according to an aspect of the present invention includes a display panel having a rectangular display area, an angle sensor detecting rotation angle information, and a display control portion controlling switching of the display orientation of the display panel on the basis of a detection result of the angle sensor, while the display control portion is configured not to switch the display orientation when the turning angle velocity of the display panel based on the rotation angle information is smaller than a first threshold.

In the electronic information terminal according to the aspect of the present invention, as hereinabove described, the display control portion does not switch the display orientation when the turning angle velocity of the display panel based on the rotation angle information is smaller than the first threshold, whereby in the case where the display control portion controls switching of the display orientation according to the manners of holding and inclining the electronic information terminal including the display panel with the rectangular display area, the display orientation can be prevented from being switched when the turning angle velocity is smaller than the first threshold on the basis of the detection result (the rotation angle information) of the angle sensor. Thus, the display control portion can prevent the display orientation of the display panel from being switched by automatically determining that a user does not wish to switch the display orientation when it would appear that the user does not wish to switch the display orientation, and can switch the display orientation of the display panel by automatically determining that the user wishes to switch the display orientation when it would appear that the user wishes to switch the display orientation. Therefore, the screen display orientation is switched only when the user moves the electronic information terminal quickly, and hence such a problem that the screen display orientation is switched by simply moving the electronic information terminal slightly can be avoided. Thus, the screen of the electronic information terminal can be prevented from being erroneously displayed with unintended orientation.

In the aforementioned electronic information terminal according to the aspect, the angle sensor is preferably configured to be capable of detecting the inclination angle of the display panel with respect to a horizontal plane, and the display control portion is preferably configured not to switch the display orientation when the turning angle velocity is smaller than the first threshold and the inclination angle is smaller than a second threshold. According to this structure, in the case where the display control portion controls switching of the display orientation, the display control portion can perform control of switching the display orientation on the basis of the two pieces of information of the turning angle velocity of the display area and the inclination angle of the display panel with respect to the horizontal plane, and hence the screen of the electronic information terminal can be easily prevented from being erroneously displayed with unintended orientation.

In the aforementioned structure in which the angle sensor detects the inclination angle, the angle sensor preferably includes a first measurement means measuring the inclination angle of a vertical axis along the short-side direction of the display panel with respect to the horizontal plane and a second measurement means measuring the inclination angle of a horizontal axis along the longitudinal direction of the display panel with respect to the horizontal plane, and the display control portion preferably includes a determination portion determining the display orientation of the display panel on the basis of the inclination angle of the vertical axis along the short-side direction measured by the first measurement means and the inclination angle of the horizontal axis along the longitudinal direction measured by the second measurement means. According to this structure, the display control portion can reliably grasp the posture of the display panel on the basis of the detection result (the inclination angle of the vertical axis and the inclination angle of the horizontal axis of the display panel with respect to the horizontal plane) of the angle sensor and properly determine the display orientation of the display panel by the determination portion.

In the aforementioned structure in which the display control portion includes the determination portion, the first threshold preferably includes a third threshold for a change amount of the inclination angle of the vertical axis and a fourth threshold for a change amount of the inclination angle of the horizontal axis, and the display control portion is preferably configured not to switch the display orientation when the turning angle velocity that is the change amount per unit time of the inclination angle of the vertical axis is less than the third threshold, the turning angle velocity that is the change amount per unit time of the inclination angle of the horizontal axis is less than the fourth threshold, and both the inclination angle of the vertical axis and the inclination angle of the horizontal axis are less than the second threshold. According to this structure, the display control portion can accurately grasp the posture of the display panel, using the third and fourth thresholds serving as reference values of the change amounts per unit time of the inclination angles individually set for the vertical axis and the horizontal axis and the second threshold serving as the reference value of each of the inclination angle of the vertical axis and the inclination angle of the horizontal axis, and hence control of unintentionally switching the display orientation of the display panel can be reliably prevented.

In this case, the third threshold and the fourth threshold are preferably different from each other. According to this structure, control of preventing switching of the display orientation of the display panel can be effectively made work. In other words, the display panel is rectangular, and hence actually, rotational velocity at which horizontally long display is rotated to vertically long display is likely to be different from rotational velocity at which horizontally long display is rotated to vertically long display. This is also clear from the fact that there is a difference in rotational moment since the vertical length from the position of the center of gravity is different from the horizontal length from the position of the center of gravity. Thus, the significance of employing different thresholds (the third threshold and the fourth threshold) for the change amount of the inclination angle of the vertical axis and the change amount of the inclination angle of the horizontal axis emerges.

In the aforementioned structure in which the angle sensor detects the inclination angle, the display control portion is preferably configured to switch the display orientation on the basis of only the inclination angle without determining whether or not to switch the display direction on the basis of the turning angle velocity when the inclination angle is larger than the second threshold. According to this structure, when the inclination angle is larger than the second threshold, the display control portion can quickly shift to control of switching the direction orientation on the basis of only the inclination angle without determining whether or not to switch the display orientation on the basis of the turning angle velocity, and hence screen display according to the state of the electronic information terminal in use can be quickly realized. In addition, determination whether or not to switch the display orientation based on the turning angle velocity is omitted, and hence the processing load of the display control portion can be reduced.

In the aforementioned electronic information terminal according to the aspect, the display control portion is preferably configured to remove a noise element included in the detection value of the angle sensor on the basis of detection results obtained by a plurality of times of detection of the angle sensor when using the detection result of the angle sensor. According to this structure, the display control portion can accurately grasp the posture of the display panel, using the detection result from which the noise element has been removed.

In this case, the display control portion is preferably configured to remove the noise element by averaging the detection results obtained by the plurality of times of detection of the angle sensor. According to this structure, even in the case where the detection results obtained by the plurality of times of detection of the angle sensor are used, the variation in the detection results is inhibited from influencing determination regarding the posture of the display panel. Thus, erroneous determination resulting from the variation in the detection results can be inhibited.

In the aforementioned electronic information terminal according to the aspect, the first threshold is preferably set to correspond to a running application, and the display control portion is preferably configured not to switch the display orientation when the turning angle velocity is smaller than the first threshold corresponding to the running application. According to this structure, the first threshold serving as a determination reference for grasping the posture of the display panel is individually set to correspond to the running application, and hence a user's intention of using the electronic information terminal (which application is in use) can be more easily reflected on control of switching the display orientation of the display panel.

In the aforementioned structure in which the first threshold is set to correspond to the running application, the first threshold corresponding to each individual application is preferably stored, and the display control portion is preferably configured to acquire the first threshold corresponding to the running application and compare the first threshold with the turning angle velocity. According to this structure, the display control portion can easily perform control of switching the display orientation of the display panel on the basis of the first threshold corresponding to the running application while properly retrieving the first threshold corresponding to each individual application stored in the electronic information terminal.

In the aforementioned structure in which the first threshold is set to correspond to the running application, the first threshold corresponding to each application type or each execution module name upon execution of the application is preferably stored, and the display control portion is preferably configured to acquire the first threshold corresponding to the type of the running application or the name of an execution module of the running application and compare the first threshold with the turning angle velocity. According to this structure, the display control portion can perform more detailed control of switching the display orientation of the display panel on the basis of the first threshold set in detail for each application type or each execution module in execution of one application.

In the aforementioned electronic information terminal according to the aspect, the first threshold is preferably changeable, and the display control portion is preferably configured not to switch the display orientation when the turning angle velocity is smaller than the first threshold that is changeable. According to this structure, the user can change the first threshold to a proper value unlike the case where the first threshold is an unchangeable fixed value that is previously set, and hence modes of operation in use based on individual differences between users using the electronic information terminal (such as a velocity at which the posture of the display panel is changed, differing depending on the user) can be more easily reflected on control of switching the display orientation of the display panel.

In the aforementioned structure in which the first threshold is changeable, the display control portion is preferably configured to set the first threshold after change by adding a prescribed value to the first threshold before change or subtracting the prescribed value from the first threshold before change when receiving a user's input indicating whether or not to change the first threshold that is changeable. According to this structure, the first threshold can be easily changed on control on the basis of the first threshold before change.

In this case, the display control portion is preferably configured to receive a user's input only for a prescribed period of time after first activation. According to this structure, the input indicating whether or not to change the first threshold can be received only for the prescribed period of time after the first activation, and the display control portion can immediately shift to the subsequent control processing without receiving the input indicating whether or not to change the first threshold after the elapse of the prescribed period of time. Thus, control of switching the display orientation of the display panel can be performed without delay while the user's operation is inhibited from being complicated, unlike the case where the display control portion repeatedly requires the user's input operation constantly.

In the aforementioned structure in which the first threshold is changeable, the display control portion is preferably configured to be capable of setting the first threshold that is changeable for each user. According to this structure, the modes of operation in use based on individual differences between users using the electronic information terminal can be reliably reflected on control of switching the display orientation, and hence the convenience of the electronic information terminal can be improved.

According to the present invention, the electronic information terminal substantially horizontally utilized by the user, capable of preventing the display orientation from being switched by automatically determining that the user does not wish to switch the display orientation when it would appear that the user does not wish to switch the display orientation, and capable of switching the display orientation by automatically determining that the user wishes to switch the display orientation when it would appear that the user wishes to switch the display orientation and the display method of the electronic information terminal can be provided.

In other words, according to the present invention, the screen display orientation is switched only when the user moves the electronic information terminal quickly, and hence such a problem that the screen display orientation is switched by simply moving the electronic information terminal slightly can be avoided. Thus, the screen of the electronic information terminal can be prevented from being erroneously displayed with unintended orientation. Furthermore, the prescribed threshold (the first threshold) is changed to correspond to the running application, whereby the user's intention can be more easily reflected. In addition, the prescribed threshold (the first threshold) is rendered changeable and is changed to the proper value, whereby the user's intention can be more easily reflected.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic block diagram of an electronic information terminal;
Fig. 2 is a perspective view of the electronic information terminal;
Fig. 3 is a schematic view showing the criteria for the angle of the electronic information terminal;
Fig. 4 is a schematic view showing the criteria for the angle of the electronic information terminal;
Fig. 5 is a flowchart showing a procedure for determining the display orientation of the electronic information terminal;
Fig. 6 is a graph showing the angular variation of the electronic information terminal;
Fig. 7 is a graph showing the angular variation of the electronic information terminal;
Fig. 8 is a flowchart showing a procedure for changing the threshold of the electronic information terminal; and
Fig. 9 is a flowchart showing a procedure for determining the display orientation of the electronic information terminal.

### DESCRIPTION OF THE PREFERRED EMBODIMENTS

Embodiments of the present invention are hereinafter described with reference to the drawings.

### (First Embodiment)

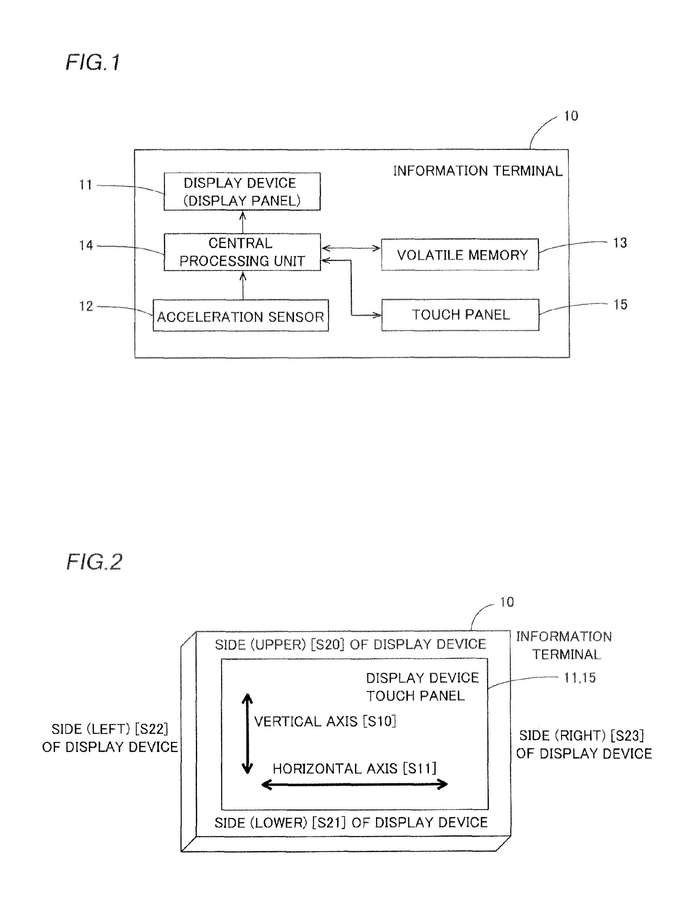

As shown in Fig. 1, the information terminal 10 as the electronic information terminal includes a display panel 11, which is a display device, an acceleration sensor 12 measuring the angle of a vertical axis along the short-side direction of the display panel 11 with respect to a horizontal plane and the angle of a horizontal axis along the longitudinal direction of the display panel 11 with respect to the horizontal plane, a volatile memory 13, a central processing unit 14, and a touch panel 15 mounted to overlap the display panel 11. The information terminal 10 is an example of the "electronic information terminal" in the present invention. The acceleration sensor 12 and the central processing unit 14 are examples of the "angle sensor" and the "display control portion" in the present invention, respectively.

The central processing unit 14 acquires data from the acceleration sensor 12 for each prescribed time period and converts the data into angle (inclination angle) data of the vertical axis of the display panel 11 and angle (inclination angle) data of the horizontal axis of the display panel 11 to store the angle data in the volatile memory 13. Then, the central processing unit 14 reads the aforementioned angle data from the volatile memory 13 and performs processing for determining the screen display orientation of the display panel 11. The central processing portion 14 properly generates display screen data according to the orientation of the screen when determining the screen display orientation, and outputs the display screen data to the display panel 11.

The display panel 11 is a type of liquid crystal display panel and includes many pixels vertically and horizontally arranged on a dot matrix in a rectangular display area. The display area has a short side and a long side, and in general, a state of horizontally orienting the long side is referred to as lateral display (horizontally long display) while a state of horizontally orienting the short side is referred to as vertical display (vertically long display). The central processing unit 14 determines display contents on the display panel 11 and generates image data according to display orientation in either case of lateral display or vertical display.

The central processing unit 14 executes prescribed programs stored in an unshown ROM and an unshown RAM. The central processing unit 14 determines whether to display image data on the display panel 11 laterally or longitudinally at that point, and thereafter generates horizontally long or vertically long image data and displays the same on the display panel 11. Therefore, this central processing unit 14 constitutes the display control portion in combination with software.

The acceleration sensor 12 can detect acceleration in three-dimensional directions in addition to DC components and also functions as a gravity sensor. Basically, the three-dimensional directions correspond to the lateral direction, the longitudinal direction, and the thickness direction of the information terminal 10, and the central processing unit 14 can obtain a velocity component by integrating an acceleration value and measure the inclination direction of the information terminal 10, utilizing the acceleration sensor 12 as a gravity sensor. The acceleration sensor 12 cannot measure the inclination angle independently, and hence the acceleration sensor 12 functions as an angle sensor, including arithmetic processing performed by the central processing unit 14, according to the first embodiment. The acceleration sensor 12 includes means (the first measurement means in the present invention) of measuring the angle of the vertical axis of the display panel 11 with respect to the horizontal plane and means (the second measurement means in the present invention) of measuring the angle of the horizontal axis of the display panel 11 with respect to the horizontal plane.

The touch panel 15 is substantially integrated with the display panel 11 and can output a touch position in the display area of the display panel 11 as position data based on an X-Y coordinate axis to the central processing unit 14. Illustration of operators other than the touch panel 15 is omitted, but the information terminal 10 includes various push buttons, a slide switch, etc. The volatile memory 13 is employed to temporarily store arithmetic results of the central processing unit 14 and temporarily store output data from the acceleration sensor 12.

The definitions of the vertical axis [S10] and the horizontal axis [S11] of the display panel 11 according to the first embodiment are shown in Fig. 2. As shown in Fig. 2, the longitudinal direction of the display panel 11 is set to the vertical axis [S10] and the lateral direction of the display panel 11 is set to the horizontal axis [S10] when the information terminal 10 is viewed from the front side while the display panel 11 is rendered longer in the horizontal direction. The upper side [S20], the lower side [S21], the left side [S22], and the right side [S23] of the display panel 11 are defined in a state where the information terminal 10 is viewed from the front side, being rendered longer in the horizontal direction, as shown in Fig. 2.

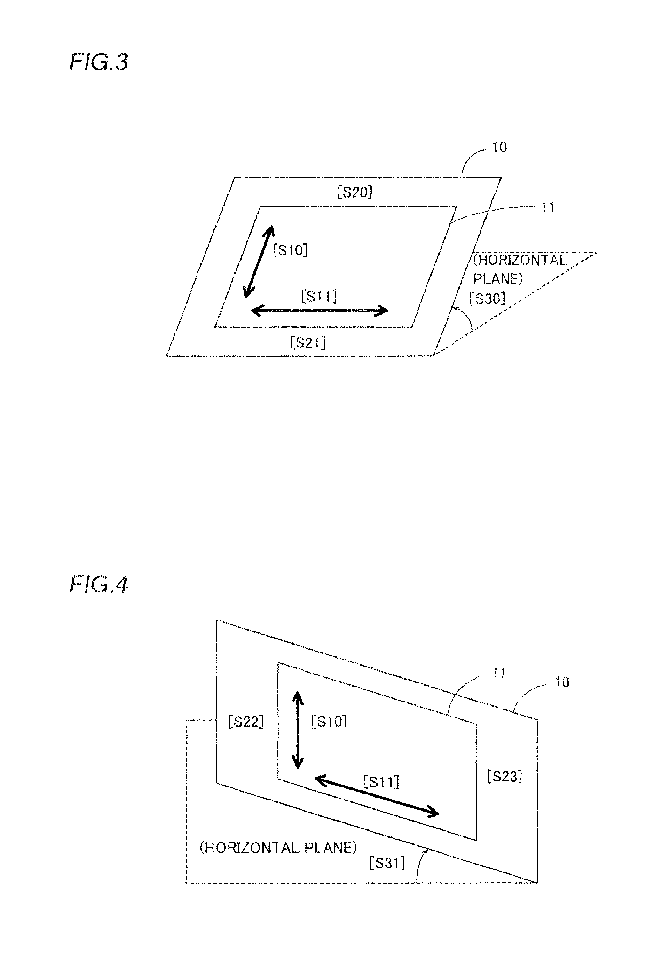

The definition of the angle [S30] of the vertical axis of the information terminal 10 according to the first embodiment is shown in Fig. 3. The angle [S30] is an example of the "inclination angle" or the "inclination angle of the vertical axis" in the present invention.

The angle [S30] of the vertical axis of the display panel 11 is an angle at which the left side [S22] or the right side [S23] of the display panel 11 intersects with the horizontal plane, namely an angle formed between the aforementioned vertical axis [S10] and the horizontal plane. During change of the angle [S30] of the vertical axis between 0 degrees and 180 degrees, the upper side [S20] is located above the lower side [S21] when the horizontal plane is used as a reference. During change of the angle [S30] of the vertical axis between 180 degrees and 360 degrees, the lower side [S21] is located above the upper side [S20] when the horizontal plane is used as a reference.

The definition of the angle [S31] of the horizontal axis of the information terminal 10 according to the first embodiment is shown in Fig. 4. The angle [S31] is an example of the "inclination angle" or the "inclination angle of the horizontal axis" in the present invention.

The angle [S31] of the horizontal axis of the display panel 11 is an angle at which the upper side [S20] or the lower side [S21] of the display panel 11 intersects with the horizontal plane, namely an angle formed between the aforementioned horizontal axis [S11] and the horizontal plane. During change of the angle [S31] of the horizontal axis between 0 degrees and 180 degrees, the left side [S22] is located above the right side [S23] when the horizontal plane is used as a reference. During change of the angle [S31] of the horizontal axis between 180 degrees and 360 degrees, the right side [S23] is located above the left side [S22] when the horizontal plane is used as a reference.

According to the first embodiment, the angle [S30] of the vertical axis and the angle [S31] of the horizontal axis are defined as described above, but this is to obtain the rotation angle information of the rectangular display area of the display panel 11. A method for obtaining the rotation angle information is not restricted to this either directly or indirectly so far as the same substantially relates to the rotation angle information.

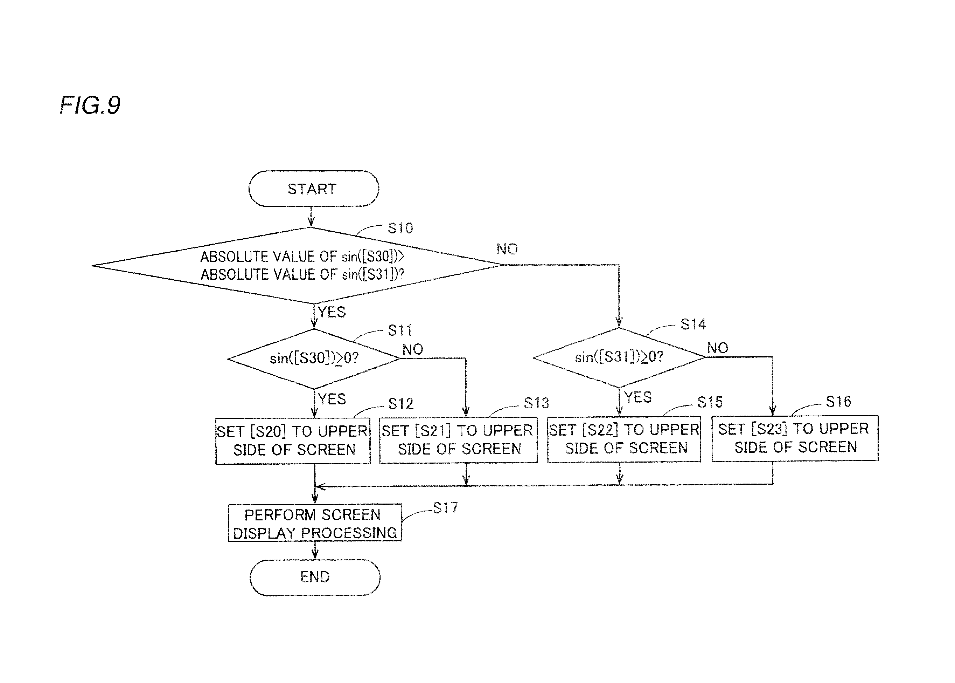

A procedure for determining the display orientation as a conventional example performed by the inventors prior to the present invention is now described with reference to Fig. 9.

The central processing unit 14 inputs detection results of the acceleration sensor 12 and obtains the angle [S30] of the vertical axis and the angle [S31] of the horizontal axis through a prescribed operation. In the flowchart, this processing is omitted, and the angle [S30] of the vertical axis and the angle [S31] of the horizontal axis are obtained through different processing.

At a step S10, the central processing unit 14 calculates the absolute value of sin([S30]) and the absolute value of sin([S31]) and determines whether or not the former (the absolute value of sin([S30])) is larger than the latter (the absolute value of sin([S31])). Determining YES means that the angle up from the horizontal plane with horizontally long display is larger than the angle up from the horizontal plane with vertically long display, so that the central processing unit 14 determines that horizontally long display should be adopted basically. On the other hand, determining NO means that the angle up from the horizontal plane with vertically long display is larger than the angle up from the horizontal plane with horizontally long display, so that the central processing unit 14 determines that vertically long display should be adopted basically.

Then, the central processing unit 14 determines whether or not sin([S30]) is at least 0 at a step S11. When the central processing unit 14 determines YES, the angle [S30] of the vertical axis is between 0 degrees and 180 degrees so that the upper side [S20] is located above the lower side [S21], and the upper side [S20] is set to the upper side of the screen at a step S12. This terminates processing for determining the display orientation in the present state. Thereafter, the central processing unit 14 performs screen display processing according to the display orientation at a step S17.

In this processing, a side located at a higher position from the horizontal plane of two sides orthogonal to an axis having a larger angle is determined to be the upper side of the screen by comparing the angle of the vertical axis and the angle of the horizontal axis, and this is similar in the following.

According to the first embodiment, the display panel 11 is rectangular, and hence a 90-degree unit is proper as the display orientation. However, if the display area of the display panel 11 is rectangular but the housing is in a unique shape, another angle may be employed to switch the display orientation.

On the other hand, when the central processing unit 14 determines that the angle [S30] of the vertical axis is less than 0, the angle [S30] of the vertical axis is between 180 degrees and 360 degrees so that the lower side [S21] is located above the upper side [S20], and the lower side [S21] is set to the upper side of the screen at a step S13. This terminates the processing for determining the display orientation. Thereafter, the central processing unit 14 performs the screen display processing according to the display orientation at the step S17 similarly.

When determining NO at the step S10, the central processing unit 14 determines that vertically long display should be adopted, and further determines whether or not sin([S31]) is at least 0 at a step S14. When the central processing unit 14 determines YES, the angle [S31] of the horizontal axis is between 0 degrees and 180 degrees so that the left side [S22] is located above the right side [S23] when the horizontal plane is used as a reference. Therefore, the left side [S22] is set to the upper side of the screen at a step S15, and the central processing unit 14 performs the screen display processing according to the display orientation at the step S17 similarly.

When the central processing unit 14 determines that the angle [S31] of the horizontal axis is less than 0, the angle [S31] of the horizontal axis is between 180 degrees and 360 degrees, so that the right side [S23] is set to the upper side of the screen at a step S16. Thereafter, the central processing unit 14 performs the screen display processing according to the display orientation at the step S17.

According to the aforementioned processing, a side set to the upper side of the screen is determined from only the angle [S30] of the vertical axis and the angle [S31] of the horizontal axis. In this method, a user simply slightly changes the inclination of the information terminal 10 involuntarily when substantially horizontally holding the information terminal 10, whereby a side set to the upper side of the screen is changed, and the screen display orientation is switched.

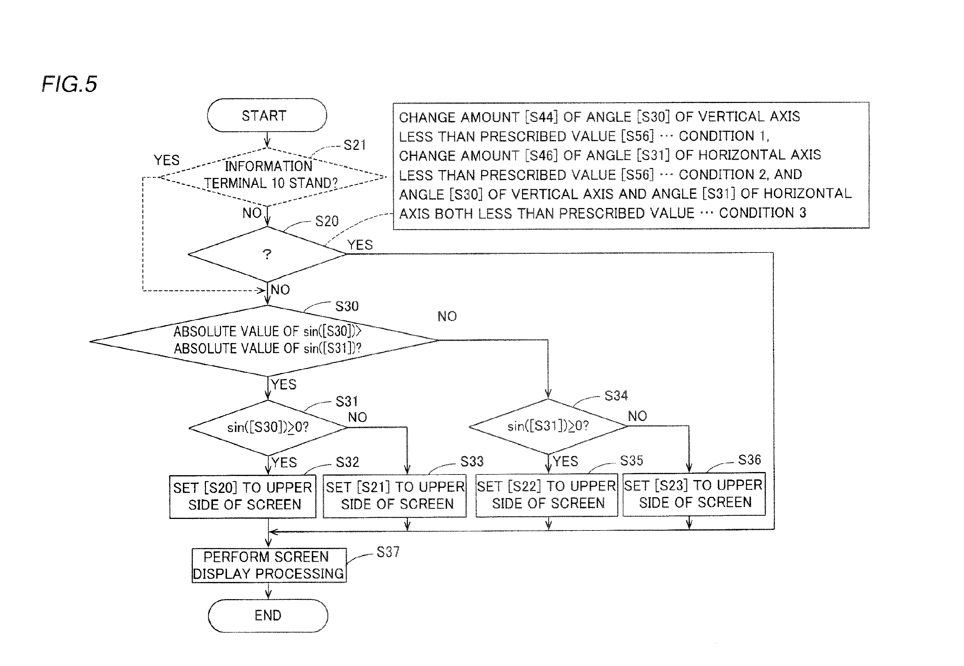

According to the first embodiment, as shown in Fig. 5, when the display orientation of the display panel 11 is determined, not only the angle [S30] of the vertical axis and the angle [S31] of the horizontal axis but also the change amount [S44] of the angle [S30] of the vertical axis per unit time and the change amount [S46] of the angle [S31] of the horizontal axis per unit time (not shown) are employed, as shown at a step S20. The change amount of the angle per unit time is namely a turning angle velocity. In other words, the change amount [S44] and the change amount [S46] are examples of the "turning angle velocity" in the present invention. When the information terminal 10 is determined to stand at a step S21 shown by a broken line in Fig. 5, processing starting from a step S30 may be performed without determination at the step S20. In other words, the determination at the step S20 may be made when the information terminal 10 does not stand. Whether or not the information terminal 10 stands can be determined by determining whether or not both the angle [S30] of the vertical axis and the angle [S31] of the horizontal axis are smaller than the "second threshold" in the present invention.

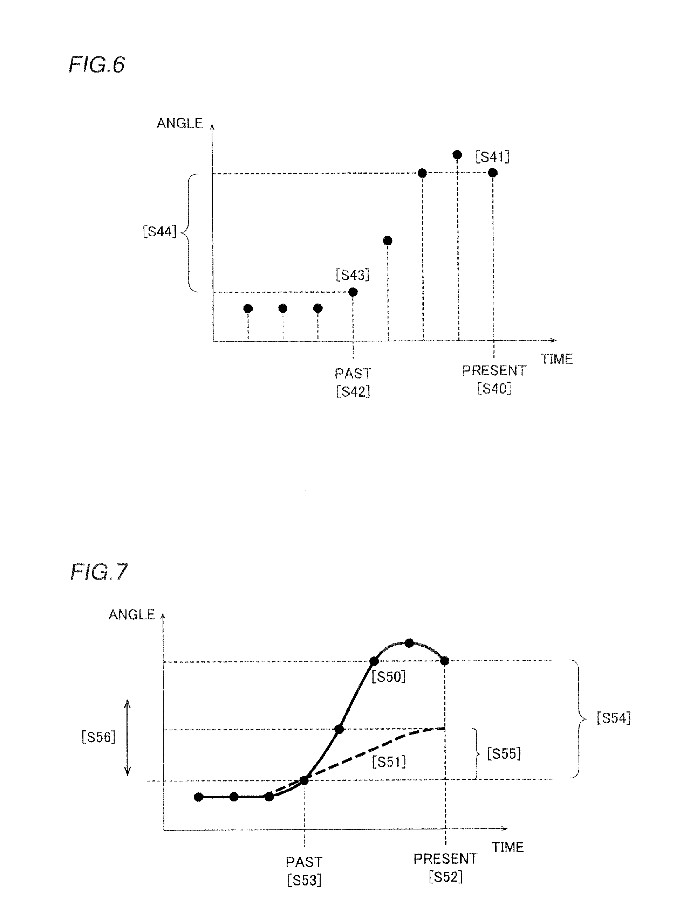

A method for calculating the change amount of the angle per unit time is now described with reference to Fig. 6. A difference between the angle [S41] at the present time [S40] and the angle [S43] at the past time [S42] before a prescribed length of time from the present time is calculated, and the absolute value thereof is set to the change amount [S44] of the angle [S30] of the vertical axis per unit time. Similarly, the change amount [S46] of the angle [S31] of the horizontal axis is obtained. The present time changes from moment to moment, and hence the change amount of the angle per unit time is obtained by constantly calculating the absolute value of this difference.

At this time, in order to remove noises included in detection values (input) of the acceleration sensor 12, data of the angle [S41] may be replaced by the average value of angle data acquired by tracing the angle data backward several times from the time [S40]. Data of the angle [S43] also may be replaced similarly.

Thus, the angle data is calculated on the basis of detection results obtained by a plurality of times of detection when the detection results of the angle sensor are employed, and hence noise elements can be removed. The calculation method is not restricted in particular, but a method through a procedure for averaging the detection results obtained by the plurality of times of detection of the angle sensor is considered as the easiest one.

Criteria for determination for changing the display orientation of the display panel 11 according to the first embodiment are now described with reference to Fig. 7.

When the user moves the information terminal 10 quickly, the angle [S30] of the vertical axis and the angle [S31] of the horizontal axis are changed drastically as a solid line graph [S50]. When the user moves the information terminal 10 slowly, on the other hand, the angle [S30] of the vertical axis and the angle [S31] of the horizontal axis are changed slowly as a broken line graph [S51].

At this time, the change amount of the angle changing from the present time [S52] to the past time [S53] before a prescribed length of time from the present time is an absolute value [S54] in the case of the steep solid line graph [S50], and an absolute value [S55] in the case of the gradual broken line graph [S51]. As described above, these absolute values [S54] and [S55] correspond to the change amounts [S44] and [S46], respectively. Therefore, how quickly the user moves the information terminal 10 can be determined on the basis of the change amounts [S44] and [S46].

According to the first embodiment, the change amounts [S44] and [S46] of the angle [S30] of the vertical axis and the angle [S31] of the horizontal axis are compared with respective prescribed values (thresholds) [S56] serving as reference values. When the aforementioned change amount of the angle [S30] of the vertical axis is less than the prescribed value [S56] and the aforementioned change amount of the angle [S31] of the horizontal axis is less than the prescribed value [S56], the display orientation of the display panel 11 is prevented from being changed since this means that the user moves the information terminal slowly. The prescribed values (thresholds) [S56] are examples of the "first threshold" in the present invention. In addition, the prescribed values (thresholds) [S56] are examples of the "third threshold" or the "fourth threshold" in the present invention.

Consequently, when the user moves the information terminal 10 quickly as in the case of the solid line graph [S50], whether or not the display orientation of the display panel 11 is changed is determined, and processing for changing the display orientation is performed. When the user moves the information terminal 10 slowly as in the case of the broken line graph [S51], the display orientation of the display panel 11 can be prevented from being changed.

The aforementioned control is now described with reference to the flowchart in Fig. 5.

The central processing unit 14 makes the following determination at the step S20. Namely, the central processing unit 14 determines whether or not:
the aforementioned change amount [S44] of the angle [S30] of the vertical axis is less than the prescribed value [S56] ... condition 1,
the aforementioned change amount [S46] of the angle [S31] of the horizontal axis is less than the prescribed value [S56] ... condition 2, and
both the aforementioned angle [S30] of the vertical axis and the aforementioned angle [S31] of the horizontal axis are less than a prescribed value ... condition 3.

The "prescribed value" in the aforementioned condition 3 is an example of the "second threshold" in the present invention.

The condition 1 and the condition 2 relate to how fast the user moves the information terminal 10, as described above. The condition 3 denotes that the inclination angles (the angle [S30] of the vertical axis and the angle [S31] of the horizontal axis) of the information terminal 10 (the display panel 11) with respect to the horizontal plane are small. The small inclination angles with respect to the horizontal plane mean that the user wishes to use the information terminal 10 substantially horizontally. At this time, the display orientation is likely to be switched unintentionally. Therefore, in order not to unintentionally switch the display orientation when the user intentionally uses the information terminal 10 substantially horizontally, the information terminal 10 is so configured that the display orientation is not switched when the user moves the information terminal 10 slowly and is switched when the user moves the information terminal 10 quickly.

In the aforementioned example, the same thresholds [S56] are used in the conditions 1 and 2. However, the prescribed value compared with the change amount [S44] per unit time of the angle [S30] of the vertical axis may be different from the prescribed value compared with the change amount [S46] per unit time of the angle [S31] of the horizontal axis. The display panel 11 is rectangular, and hence actually, velocity at which horizontally long display is rotated to vertically long display is likely to be different from velocity at which horizontally long display is rotated to vertically long display. This is also clear from the fact that there is a difference in rotational moment since the vertical length from the position of the center of gravity is different from the horizontal length from the position of the center of gravity. Thus, the significance of employing different thresholds for the change amount of the angle of the vertical axis and the change amount of the angle of the horizontal axis emerges.

After this, processing for switching the display orientation by user's quick rotation of the information terminal 10 is started from the step S30. Processing starting from the step S30 is substantially identical to the processing shown in Fig. 9. In order to help make correspondence relation easier to understand, the final digits are matched (S10 → S30, S11 → S31, S12 → S32, S13 → S33, S14 → S34, S15 → S35, S16 → S36, S17 → S37). Therefore, the detailed description is omitted.

According to the first embodiment, as hereinabove described, the central processing unit 14 is configured not to switch the display orientation when the change amount [S44] and the change amount [S46] (the turning angle velocities) are smaller than the respective thresholds [S56], whereby in the case where the central processing unit 14 controls switching of the display orientation according to the manners of holding and inclining the information terminal 10 including the display panel 11 with the rectangular display area, the display orientation can be prevented from being switched when the change amount [S44] and the change amount [S46] (the turning angle velocities) are smaller than the respective thresholds [S56] on the basis of the detection results (the rotation angle information) of the acceleration sensor 12. Thus, the central processing unit 14 can prevent the display orientation of the display panel 11 from being switched by automatically determining that the user does not wish to switch the display orientation when it would appear that the user does not wish to switch the display orientation, and can switch the display orientation of the display panel 11 by automatically determining that the user wishes to switch the display orientation when it would appear that the user wishes to switch the display orientation. Therefore, the screen display orientation is switched only when the user moves the information terminal 10 quickly, and hence such a problem that the screen display orientation is switched by simply moving the information terminal 10 slightly can be avoided. Thus, the screen of the information terminal 10 can be prevented from being erroneously displayed with unintended orientation.

According to the first embodiment, the acceleration sensor 12 is configured to detect the angle [S30] of the vertical axis [S10] and the angle [S31] of the horizontal axis [S11] (the inclination angles) with respect to the horizontal plane if the display panel 11 based on calculation of the central processing unit 14 in addition to detection of the change amount [S44] and the change amount [S46] of the display panel 11 based on calculation of the central processing unit 14, and the central processing unit 14 is configured not to switch the display orientation when on the basis of the detection results of the acceleration sensor 12, the change amount [S44] and the change amount [S46] (the turning angle velocities) are smaller than the respective thresholds [S56] and the angle [S30] of the vertical axis and the angle [S31] of the horizontal axis (the inclination angles) are smaller than the prescribed value (= the second threshold: see the condition 3 in Fig. 5). Thus, in the case where the central processing unit 14 controls switching of the display orientation, the central processing unit 14 can perform control of switching the display orientation on the basis of the two pieces of information of the change amount [S44] and the change amount [S46] (the turning angle velocities) of the display area and the angle [S30] of the vertical axis and the angle [S31] of the horizontal axis (the inclination angles) of the display panel 11 with respect to the horizontal plane, and hence the screen of the information terminal 10 can be easily prevented from being erroneously displayed with unintended orientation.

According to the first embodiment, the acceleration sensor 12 is configured to measure the angle [S30] of the vertical axis along the short-side direction of the display panel 11 with respect to the horizontal plane and the angle [S31] of the horizontal axis along the longitudinal direction of the display panel 11 with respect to the horizontal plane, and the central processing unit 14 determines the display orientation of the display panel 11 on the basis of the measured angle [S30] of the vertical axis along the short-side direction and the measured angle [S31] of the horizontal axis along the longitudinal direction. Thus, the central processing unit 14 can reliably grasp the posture of the display panel 11 on the basis of the detection results (the angle [S30] of the vertical axis and the angle [S31] of the horizontal axis of the display panel 11 with respect to the horizontal plane) of the acceleration sensor 12 and properly determine the display orientation of the display panel 11.

According to the first embodiment, the central processing unit 14 is configured not to switch the display orientation when the change amount [S44] per unit time of the angle [S30] of the vertical axis as the turning angle velocity is less than the threshold [S56], the change amount [S46] per unit time of the angle [S31] of the horizontal axis as the turning angle velocity is less than the threshold [S56], and both the angle [S30] of the vertical axis and the angle [S31] of the horizontal axis are less than the prescribed value (= the second threshold: see the condition 3 in Fig. 5). Thus, the central processing unit 14 can accurately grasp the posture of the display panel 11, using the respective thresholds [S56] serving as reference values of the change amount [S44] and the change amount [S46] per unit time of the angles individually set for the vertical axis and the horizontal axis and the prescribed value (= the second threshold) serving as the reference value of each of the angle [S30] of the vertical axis and the angle [S31] of the horizontal axis, and hence control of unintentionally switching the display orientation of the display panel 11 can be reliably prevented.

According to the first embodiment, the threshold [S56] for the change amount [S44] of the angle [S30] of the vertical axis and the threshold [S56] for the change amount [S46] of the angle [S31] of the horizontal axis are different from each other. Thus, control of preventing switching of the display orientation of the display panel 11 can be effectively made work in the information terminal 10 including the rectangular display panel 11.

According to the first embodiment, the central processing unit 14 is configured to switch the display orientation on the basis of only the angle [S30] of the vertical axis and the angle [S31] of the horizontal axis (the inclination angles) without determining whether or not to switch the display direction on the basis of the change amount [S44] and the change amount [S46] (the turning angle velocities) when the angle [S30] of the vertical axis and the angle [S31] of the horizontal axis are larger than the prescribed value (= the second threshold: see the condition 3 in Fig. 5). Thus, when the angle [S30] of the vertical axis and the angle [S31] of the horizontal axis (the inclination angles) are larger than the prescribed value (= the second threshold), the central processing unit 14 can quickly shift to control of switching the direction orientation on the basis of only the angle [S30] of the vertical axis and the angle [S31] of the horizontal axis (the inclination angles) without determining whether or not to switch the display orientation on the basis of the turning angle velocities, and hence screen display according to the state of the information terminal 10 in use can be quickly realized. In addition, the processing load of the central processing unit 14 can be reduced.

According to the first embodiment, the central processing unit 14 is configured to remove the noise elements included in the detection values of the acceleration sensor 12 on the basis of the detection results obtained by the plurality of times of detection of the acceleration sensor 12 when using the detection results of the acceleration sensor 12. Thus, the central processing unit 14 can accurately grasp the posture of the display panel 11, using the detection results from which the noise elements have been removed.

According to the first embodiment, the central processing unit 14 is configured to remove the noise elements by averaging the detection results obtained by the plurality of times of detection of the acceleration sensor 12. Thus, even in the case where the detection results obtained by the plurality of times of detection of the acceleration sensor 12 are used, the variation in the detection results is inhibited from influencing determination regarding the posture of the display panel 11. Thus, erroneous determination resulting from the variation in the detection results can be inhibited.

### (Second Embodiment)

According to the aforementioned first embodiment, the central processing unit 14 makes the determination based on the turning angle velocities at the step S20, and thereafter specifically determines the display orientation at the steps S30 to S36. However, the processing at the step S30 to S36 may be performed by a separate module. When the screen display processing at the step S37 is performed, the determination results of this separate module are utilized. In this case, this separate module corresponds to a determination portion determining the display orientation. When the display orientation is not switched as the result of determination at the step S20, control of preventing adoption of the determination of the aforementioned determination portion may be performed.

### (Third Embodiment)

When whether or not the display panel 11 is in the substantially horizontal state is determined, whether or not the inclination angles (the angle [S30] of the vertical axis and the angle [S31] of the horizontal axis) of the information terminal 10 with respect to the horizontal plane are small is determined at the condition 3. However, the inclination angles with respect to the horizontal plane can be determined by a method other than this.

In other words, when either the angle [S30] of the vertical axis or the angle [S31] of the horizontal axis is large (either the angle [S30] of the vertical axis or the angle [S31] of the horizontal axis is larger than the prescribed value (= the second threshold (see Fig. 5))), in other words, when the absolute value of a difference between the angle [S30] of the vertical axis and the angle [S31] of the horizontal axis is large, it can be said that the inclination angle of the information terminal 10 with respect to the horizontal plane is large or the information terminal 10 stands. In this case, even if the change amount [S44] or [S46] of the angle [S30] of the vertical axis or the angle [S31] of the horizontal axis is not used unlike the above, the screen of the information terminal 10 is not likely to be erroneously displayed with unintended orientation.

According to a third embodiment, the central processing unit 14 makes this determination at the step S21 prior to the step S20 in Fig. 5, skips the determination at the step S20 when determining that the information terminal 10 stands, and advances to the step S30. In other words, the central processing unit 14 does not make the determination based on the turning angle velocities when the aforementioned inclination angle is larger than the prescribed threshold on the basis of the detection results of the acceleration sensor 12 and the information terminal 10 stands.

According to the third embodiment, control of switching between the method according to the present invention and the conventional display change method depending on the angle of the information terminal 10 is performed as usual, whereby optimum display according to the usage style of the user can be automatically realized,

### (Fourth Embodiment)

According to each of the aforementioned first to third embodiments, the thresholds [S56] compared with the change amounts [S44] and [S46] at the step S20 are constant. Even in the case where the threshold for the vertical axis is different from the threshold for the horizontal axis, the thresholds [S56] are constant.

A situation where the user does not intend to change the display orientation may exist depending on a running application of the information terminal 10. Even if the information terminal 10 is inclined when the user reads an electronic book, for example, the user may not intend to change the display orientation but may simply change the reading posture. Therefore, according to the fourth embodiment, a threshold corresponding to the running application is utilized in order to more properly reflect the user's intention.

According to the fourth embodiment, the name of a running application, the type of the running application, and the execution module of the running application are utilized.

When the name of the running application is utilized, an optimum threshold is associated with each individual application and this association is stored as a correspondence table in a storage area of a nonvolatile memory 13a. A ROM may be used as the nonvolatile memory 13a, but it is only necessary to utilize various rewritable nonvolatile memories. An external memory or the like of the information terminal 10 can be utilized, for example.

Prior to the step S20, the central processing unit 14 performs the following processing of:
1: acquiring the name of the running application;
2: searching the acquired name of the application from the correspondence table in the nonvolatile memory 13a;
3: retrieving a threshold corresponding to the name of the application; and
4: setting this threshold to a threshold for comparison at the step S20.

In this manner, a threshold corresponding to each of the names of applications can be utilized.

The following can be utilized as an example of the content of the correspondence table.

### <Example 1 of Correspondence Table>

electronic book reader 1: Th1
browser 1: Th2
game 1: Th3

Here, there is a relation of Th1 > Th2 > Th3. In other words, as to the electronic book reader 1, the largest threshold is set as a threshold for turning angle velocities, and hence the display orientation is not switched even by relatively quick rotation. On the other hand, as to the game 1, the smallest threshold is set as the threshold for turning angle velocities, and hence the display orientation is not switched only in the case of very slow rotation.

The above is an example of utilizing the threshold corresponding to each individual application.

It can be said that also in the case where the information terminal 10 is configured to be capable of setting a threshold for the type of the application in addition to individually setting a threshold for each application, a user's intention can be generally reflected. When using the electronic book reader, for example, the user conceivably does not want the display orientation to frequently switch even in the case where there are a plurality of reader applications. In contrast, the user is likely to want the display orientation to frequently switch when using another application such as a game or a music player. Therefore, it is also effective to store a threshold corresponding to each of the types of applications.

When the type of the application is utilized, an optimum threshold is associated with each application type and this association is stored as a correspondence table in the storage area of the nonvolatile memory.

Prior to the step S20, the central processing unit 14 performs the following processing of:
1: acquiring the type of the running application;
2: searching the acquired type of the application from the correspondence table in the nonvolatile memory 13a;
3: retrieving a threshold corresponding to the acquired type of the application; and
4: setting this threshold to a threshold for comparison at the step S20.

In this manner, a threshold corresponding to each of the types of the applications can be utilized.

The following can be utilized as an example of the content of the correspondence table.

### <Example 2 of Correspondence Table>

reader type: Th1
browser type: Th2
music type: Th3

Also in this case, there is a relation of Th1 > Th2 > Th3. Thus, as to the reader type, the largest threshold is set as a threshold for turning angle velocities, and hence the display orientation is not switched even by relatively quick rotation. On the other hand, as to the music type, the smallest threshold is set as the threshold for turning angle velocities, and hence the display orientation is not switched only in the case of very slow rotation.

The above is an example of utilizing the threshold corresponding to each application type.

In contrast, there may be a situation where the user may not want the display orientation to frequently switch when operating some part of an application. There is a possibility that the information terminal 10 is inclined by posture change during display of a setting screen of the application, for example. In consideration of this, the execution module of the application is associated with a threshold, and this association is stored as a correspondence table.

The central processing unit 14 acquires the execution module name of the running application and retrieves a corresponding threshold. Specifically, prior to the step S20, the central processing unit 14 performs the following processing of:
1: acquiring the execution module name of the running application;
2: searching the acquired execution module name from the correspondence table in the nonvolatile memory 13a;
3: retrieving a threshold corresponding to the acquired execution module name from the correspondence table; and
4: setting this threshold to a threshold for comparison at the step S20.

In this manner, a threshold corresponding to each execution module name can be utilized.

The following can be utilized as an example of the content of the correspondence table.

### <Example 3 of Correspondence Table>

setting screen display module 1: Th1
setting screen display module 2: Th2

In this case, Th 3 is set as a default value when no execution module is found. Also in this case, there is a relation of Th1 > Th2 > Th3, and a relatively large threshold is set for the case where the setting screen display module 1 or the setting screen display module 2 is in execution and the information terminal 10 waits for user's setting on the setting screen. Consequently, the display orientation is not switched even by relatively quick rotation in the case of the setting screen. On the other hand, in the case of another screen for which a default value is set, a small threshold is set, and hence the display orientation is not switched only in the case of very slow rotation.

The above is an example of utilizing the threshold corresponding to the execution module of the application.

Thus, according to the fourth embodiment, the threshold [S56] corresponding to the running application is set on the basis of the name of the application, the type of the application, the execution module of the application, or the like, and the central processing unit 14 is configured not to switch the display orientation when the turning angle velocities are smaller than the threshold [S56] on the basis of the detection results of the acceleration sensor 12.

According to the fourth embodiment, as hereinabove described, the threshold [S56] is set to correspond to the running application, and the central processing unit 14 is configured not to switch the display orientation when the change amount [S44] and the change amount [S46] (the turning angle velocities) are smaller than the threshold [S56] on the basis of the threshold [S56] corresponding to the running application and the detection results of the acceleration sensor 12. Thus, the threshold [S56] serving as a determination reference for grasping the posture of the display panel 11 is individually set to correspond to the running application, and hence a user's intention of using the information terminal 10 (which application is in use) can be more easily reflected on control of switching the display orientation of the display panel 11.

According to the fourth embodiment, the threshold [S56] corresponding to each individual application is stored, and the central processing unit 14 is configured to acquire the threshold [S56] corresponding to the running application and compare the threshold [S56] with the change amount [S44] and the change amount [S46] (the turning angle velocities). Thus, the central processing unit 14 can easily perform control of switching the display orientation of the display panel 11 on the basis of the threshold [S56] corresponding to the running application while properly retrieving the threshold [S56] corresponding to each individual application stored in the information terminal 10.

According to the fourth embodiment, the threshold [S56] corresponding to each application type or each execution module name upon execution of the application is stored, and the central processing unit 14 is configured to acquire the threshold [S56] corresponding to the type of the running application or the name of the execution module of the running application and compare the threshold [S56] with the change amount [S44] and the change amount [S46] (the turning angle velocities). Thus, the central processing unit 14 can perform more detailed control of switching the display orientation of the display panel 11 on the basis of the threshold [S56] set in detail for each application type or each execution module in execution of one application.

### (Fifth Embodiment)

According to each of the aforementioned first to fourth embodiments, the thresholds [S56] are fixed values. Even in the case where the thresholds [S56] are changed for each application, the fact remains that the thresholds to be changed are previously set fixed values. However, depending on the user, a sense of "slow" is different. Particularly, the sense is significantly different depending on age. Generally, elderly people are more likely to perform an operation slowly. In consideration of this, according to the fifth embodiment, the thresholds can be changed for each user in terms of age.

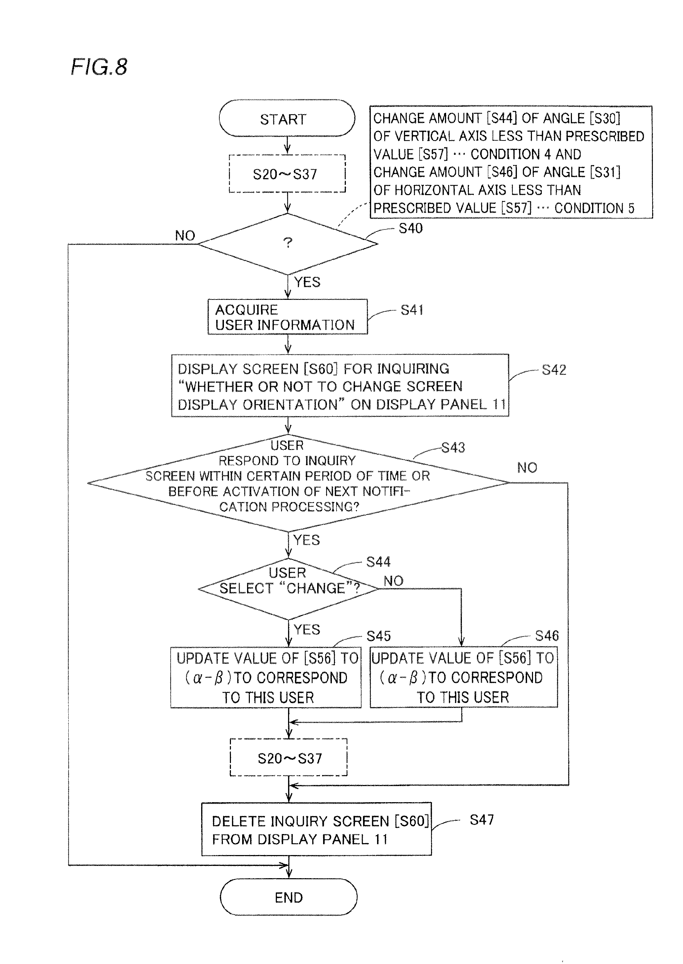

After the processing at the steps S20 to S37 shown in each of the aforementioned first to fourth embodiments is performed, processing for changing the thresholds is performed, starting from a step S40, as shown in Fig. 8.

At the step S40, conditions are similar to the conditions 1 and 2 at the step S20, but the thresholds are fixed values [S57] as described below. Therefore, the conditions are as follows:
the aforementioned change amount [S44] of the angle [S30] of the vertical axis is less than the prescribed value [S57] ... condition 4 and
the aforementioned change amount [S46] of the angle [S31] of the horizontal axis is less than the prescribed value [S57] ... condition 5.

The central processing unit 14 may make the determination on the basis of not only the conditions 4 and 5 but also the condition 3. The condition 4 and the condition 5 relate to how fast the user moves the information terminal 10. According to the fifth embodiment, the threshold is the value [S57] for processing including the steps S20 to S37, unlike the aforementioned embodiments. At the step S40, the larger of the change amounts [S44] and [S46] is stored as α.

This prescribed value (threshold) [S57] is rendered as small as possible. The set value is rendered small, whereby a screen for inquiring "whether or not to change the screen display orientation" described later can be displayed without a quick rotation angle.

When determining that the condition 4 and the condition 5 are satisfied at the step S40, the central processing unit 14 acquires user information at a step S41. In order to reflect the preference of each user in change of the threshold, an operating user is specified. Generally, login information may be utilized, but if there is no login information, a screen for selecting a user may be displayed separately to encourage the user to perform an operation of selecting a user. A threshold corresponding to the acquired user information may be stored in the aforementioned nonvolatile memory 13a.

Thereafter, the screen for inquiring "whether or not to change the screen display orientation" is displayed on the display panel 11 at a step S42. In other words, a screen [S60] for inquiring a user's intention is displayed. Generally, a screen referred to as a pop-up window may be displayed. The user may select YES or NO with the touch panel 15 or another operator. This screen is displayed for a certain period of time or until the next notification processing is activated, and the central processing unit 14 waits for the user to respond to the inquiry screen [S60] at a step S43.

At a step S44, the central processing unit 14 determines whether the user has selected "change" or "not change". If the user has selected "change", it would mean that the threshold [S56] used at this time is too large. Thus, (α - β) is set as a new threshold [S56] This value of β in subtraction is a positive value serving as a step size for searching an optimum threshold [S56] in stages.

In contrast, if the user has selected "not change", the threshold would be set to a larger value in order to make the same determination even if the user moves the information terminal 10 more slowly. Thus, the value of β is added, and (α + β) is set as a new threshold [S56]. In other words, the same value of β that is a step size is utilized in the case of increasing the threshold and in the case of decreasing the threshold. However, different step sizes may be used in the case of increasing the threshold and in the case of decreasing the threshold, or the step size itself may be gradually increased or decreased. The newly set threshold [S56] is stored for each user.

The central processing unit 14 inquires of the user "whether or not to change the screen display orientation" as described above, but this means to receive a user's input indicating whether or not to substantially change the threshold since the threshold is changed on the basis of this result. Therefore, a user interface can be properly changed. On the basis of the input indicating whether or not to change the threshold, the prescribed value is added to the threshold before change or subtracted from the threshold before change to obtain the new threshold (after change).

The central processing unit 14 sets the changed threshold at a step S45 or S46, and thereafter makes the determination at the steps S20 to S37, using the changed threshold. When the threshold [S56] is set to a smaller value, switching the display orientation is not prohibited at the steps S20 to S37 but the display orientation is supposed to be switched. In contrast, when the threshold [S56] is set to a larger value, switching the display orientation is prohibited at the steps S20 to S37 and the display orientation is not supposed to be switched. After performing processing for changing the display orientation, the central processing unit 14 deletes the aforementioned change inquiry screen [S60] at a step S47.

After that, the optimum threshold [S56] is set by repeating this. However, it is troublesome to make this selection each time. Therefore, the aforementioned input is received only for a prescribed period of time after first activation. Although this processing is not illustrated in the flowchart shown in Fig. 8, the central processing unit 14 may acquire the length of time that has elapsed since the first activation prior to the step S40 and determine whether or not the prescribed period of time has elapsed. The central processing unit 14 may perform the aforementioned processing at the step S40 to S47 when determining that the prescribed period of time has not elapsed since the first activation. The central processing unit 14 may not perform the aforementioned processing at the step S40 to S47 when determining that the prescribed period of time has elapsed since the first activation.

The information terminal 10 may be so configured that the user can select not to change the threshold [S56] on the setting screen of the information terminal 10. Furthermore, the information terminal 10 may be so configured that the user can change the threshold independently on the setting screen of this device. In other words, the information terminal 10 can be configured to change the threshold independent of the aforementioned switching of the display orientation. Needless to say, the information terminal 10 can be configured to be capable of changing the threshold independently on the setting screen and concurrently display the inquiry screen [S60] automatically for a certain period of time after the first activation.

According to the fifth embodiment, as hereinabove described, the prescribed value (the threshold) [S56] can be changed, and the central processing unit 14 is configured not to switch the display orientation when the change amount [S44] and the change amount [S46] (the turning angle velocities) are smaller than the prescribed value [S56] on the basis of the changeable threshold [S56] and the detection results of the acceleration sensor 12. Thus, the user can change the threshold [S56] to a proper value unlike the case where the threshold [S56] is an unchangeable fixed value that is previously set, and hence modes of operation in use based on individual differences between users using the information terminal 10 (such as a velocity at which the posture of the display panel 11 is changed, differing depending on the user) can be more easily reflected on control of switching the display orientation of the display panel 11.

According to the fifth embodiment, the central processing unit 14 is configured to set the threshold [S56] after change by adding the prescribed value β to the threshold [S56] before change or subtracting the prescribed value P from the threshold [S56] before change when receiving the user's input indicating whether or not to change the changeable threshold [S56]. Thus, the threshold [S56] can be easily changed on control on the basis of the threshold [S56] before change.

According to the fifth embodiment, the central processing unit 14 is configured to receive the user's input only for the prescribed period of time after the first activation. Thus, the input indicating whether or not to change the threshold [S56] can be received only for the prescribed period of time after the first activation, and the central processing unit 14 can immediately shift to the subsequent control processing (the steps S30 to S37) without receiving the input indicating whether or not to change the threshold [S56] after the elapse of the prescribed period of time. Thus, control of switching the display orientation of the display panel 11 can be performed without delay while the user's operation is inhibited from being complicated, unlike the case where the central processing unit 14 repeatedly requires the user's input operation constantly.

According to the fifth embodiment, the central processing unit 14 is configured to be capable of setting the changeable threshold [S56] for each user. Thus, the modes of operation in use based on individual differences between users using the information terminal 10 can be reliably reflected on control of switching the display orientation, and hence the convenience of the information terminal 10 can be improved.

It goes without saying that the present invention is not limited to the aforementioned first to fifth embodiments. Needless to say, persons skilled in the art would realize that the following are disclosed as embodiments other than the aforementioned first to fifth embodiments:
applying the mutually interchangeable members, configurations, and the like disclosed in the aforementioned first to fifth embodiments by changing their combinations as required,
applying the members, configurations, and the like that are not disclosed in the aforementioned first to fifth embodiments but are publicly known art and mutually interchangeable with the members, configurations, and the like disclosed in the aforementioned first to fifth embodiments, by interchanging them or by changing their combinations as required, and
applying the members, configurations, and the like that are not disclosed in the aforementioned first to fifth embodiments but that persons skilled in the art may be able to envisage as substitutes for the members, configurations, and the like disclosed in the aforementioned first to fifth embodiments on the basis of the publicly known art and the like, by interchanging them or by changing their combinations as required.

## Claims

1. An electronic information terminal (10) comprising:
a display panel (11) having a rectangular display area;
an angle sensor (12) detecting rotation angle information; and
a display control portion (14) controlling switching of a display orientation of the display panel on the basis of a detection result of the angle sensor, wherein
the display control portion is configured not to switch the display orientation when a turning angle velocity ([S44], [S46]) of the display panel based on the rotation angle information is smaller than a first threshold([S56]).

2. The electronic information terminal according to claim 1, wherein
the angle sensor is configured to be capable of detecting an inclination angle ([S30], [S31]) of the display panel with respect to a horizontal plane, and
the display control portion is configured not to switch the display orientation when the turning angle velocity is smaller than the first threshold and the inclination angle is smaller than a second threshold.

3. The electronic information terminal according to claim 2, wherein
the angle sensor includes:
a first measurement means measuring an inclination angle of a vertical axis along a short-side direction of the display panel with respect to the horizontal plane, and
a second measurement means measuring an inclination angle of a horizontal axis along a longitudinal direction of the display panel with respect to the horizontal plane, and
the display control portion includes a determination portion determining the display orientation of the display panel on the basis of the inclination angle ([S30]) of the vertical axis along the short-side direction measured by the first measurement means and the inclination angle ([S31]) of the horizontal axis along the longitudinal direction measured by the second measurement means.

4. The electronic information terminal according to claim 3, wherein
the first threshold includes a third threshold ([S56]) for a change amount of the inclination angle of the vertical axis and a fourth threshold ([S56]) for a change amount of the inclination angle of the horizontal axis, and
the display control portion is configured not to switch the display orientation when the turning angle velocity that is a change amount per unit time of the inclination angle of the vertical axis is less than the third threshold, the turning angle velocity that is a change amount per unit time of the inclination angle of the horizontal axis is less than the fourth threshold, and both the inclination angle of the vertical axis and the inclination angle of the horizontal axis are less than the second threshold.

5. The electronic information terminal according to claim 4, wherein
the third threshold and the fourth threshold are different from each other.

6. The electronic information terminal according to claim 2, wherein
the display control portion is configured to switch the display orientation on the basis of only the inclination angle without determining whether or not to switch the display direction on the basis of the turning angle velocity when the inclination angle is larger than the second threshold.

7. The electronic information terminal according to claim 1, wherein
the display control portion is configured to remove a noise element included in a detection value of the angle sensor on the basis of detection results obtained by a plurality of times of detection of the angle sensor when using the detection result of the angle sensor.

8. The electronic information terminal according to claim 7, wherein
the display control portion is configured to remove the noise element by averaging the detection results obtained by the plurality of times of detection of the angle sensor.

9. The electronic information terminal according to claim 1, wherein
the first threshold is set to correspond to a running application, and
the display control portion is configured not to switch the display orientation when the turning angle velocity is smaller than the first threshold corresponding to the running application.

10. The electronic information terminal according to claim 9, wherein
the first threshold corresponding to each individual application is stored, and
the display control portion is configured to acquire the first threshold corresponding to the running application and compare the first threshold with the turning angle velocity.

11. The electronic information terminal according to claim 9, wherein
the first threshold corresponding to each application type or each execution module name upon execution of the application is stored, and
the display control portion is configured to acquire the first threshold corresponding to a type of the running application or a name of an execution module of the running application and compare the first threshold with the turning angle velocity.

12. The electronic information terminal according to claim 1, wherein
the first threshold is changeable, and
the display control portion is configured not to switch the display orientation when the turning angle velocity is smaller than the first threshold that is changeable.

13. The electronic information terminal according to claim 12, wherein
the display control portion is configured to set the first threshold after change by adding a prescribed value to the first threshold before change or subtracting the prescribed value from the first threshold before change when receiving a user's input indicating whether or not to change the first threshold that is changeable.

14. The electronic information terminal according to claim 12, wherein
the display control portion is configured to receive a user's input only for a prescribed period of time after first activation.

15. The electronic information terminal according to claim 12, wherein
the display control portion is configured to be capable of setting the first threshold that is changeable for each user.
